Europäisches Patentamt

European Patent Office

Office européen des brevets

(19)

(11) Publication number: **0 453 572 A1**

# EUROPEAN PATENT APPLICATION
## published in accordance with Art. 158(3) EPC

(12)

(21) Application number: **90916064.0**

(22) Date of filing: **02.11.90**

(86) International application number:
**PCT/JP90/01430**

(87) International publication number:
**WO 91/07704 (30.05.91 91/12)**

(51) Int. Cl.5: **G05B 19/18**

(30) Priority: **16.11.89 JP 298567/89**

(43) Date of publication of application:
**30.10.91 Bulletin 91/44**

(84) Designated Contracting States:
**CH DE FR GB IT LI**

(71) Applicant: **FANUC LTD.**
**3580, Shibokusa Aza-Komanba, Oshino-mura**
**Minamitsuru-gun, Yamanashi 401-05(JP)**

(72) Inventor: **SASAKI, Takao**
**Estate Hachioji 2-502 469-4, Kobikimachi**
**Hachioji-shi Tokyo 193(JP)**
Inventor: **FUJIBAYASHI, Kentaro**
**2-8-6, Nishikubo Musashino-shi**
**Tokyo 180(JP)**
Inventor: **HAGA, Makoto Fanuc Dai-3**
**Vira-karamatsu**
**3527-1, Shibokusa Oshinomura**
**Minamitsuru-gun Yamanashi 401-05(JP)**

(74) Representative: **Brunner, Michael John et al**
**GILL JENNINGS & EVERY 53-64 Chancery**
**Lane**
**London WC2A 1HN(GB)**

(54) **METHOD OF CORRECTING POSITIONAL FLUCTUATION OF MACHINE.**

(57) A method of correcting positional fluctuations of a machine, particularly correcting the positional fluctuations of a machine tool having at least two control axes. A position-correcting means (12) outputs correction pulses (Xcp, Ycp) in such a manner that the ratio between the values in error registers (3X, 3Y) of the respective axes coincides with the ratio (R1) between the values of distribution pulses (Xp1, Yp1) of the respective axes. These correction pulses (Xcp. Ycp) are added to the distribution pulses (Xp1, Yp1), so that abruptly increased errors in a finished shape occurring, the finishing of the corners of a work which is performed at the start and immediately before the end of finishing can be minimized.

EP 0 453 572 A1

F I G. 1

Technical Field

The present invention relates to a method of correcting a machine position change in which a change of position of a machine tool is corrected by a numerical control device, and more particularly, to a position correction method in which a change of position of a machine tool with control axes having different rigidities is corrected.

Background Art

In a numerical control device (CNC), a workpiece is machined to a desired contour by moving a tool along a commanded path at a commanded speed in accordance with a machining program.

To obtain a satisfactorily machined surface produced in accordance with commands given to a machine tool, using such a numerical control device, it is essential to provide a servo mechanism having a responsiveness such that it can faithfully follow rapid changes of command and having a high stability enabling the maintaining of a stable movement without vibration.

The speed and position of a servomotor in the servo mechanism are detected by a speed detector and a position detector, and the detected data is fed back to a control circuit for control. The servo mechanism can be classified into three types according to the method used for the position detection; i.e., a semi-closed loop type, a closed loop type, and a hybrid servo type.

Among these three methods used for the servo mechanism, a method best suited to each machine tool is employed according to a required accuracy and rigidity, etc. of the machine tool.

In ordinary machine tools, however, the individual axes have different mechanical rigidities, and this difference becomes particularly large in large-sized machine tools. Therefore, when a cutting is effected by a machine tool with more than two axes, machining errors occur in the vicinity of the machining start and end points or at corners, and thus the cutting cannot be effected with a high accuracy.

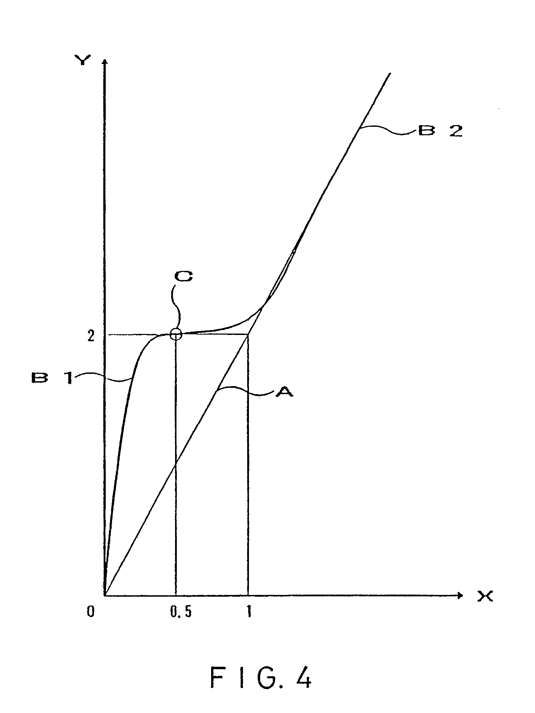

Figure 4 shows a cutting with two axes according to prior art. In this example, it is assumed that the X-axis has a relatively weak mechanical rigidity and the Y-axis has a relatively strong mechanical rigidity, and with these control axes, when the X-axis is moved by 0.100 mm, the Y-axis is moved by 0.200 mm.

If the mechanical rigidities of the X-axis and Y-axis are the same, a linear cutting with no error is usually effected as indicated by the straight line A, but if the mechanical rigidity of the X-axis is weak, a required movement of the X-axis is not attained, as indicated by the curve B1, and even though the ratio of the distribution pulse for the X-axis and Y-axis is 1:2, an actual ratio of machine position becomes 1:4, as shown at the point C, thus causing a machining error.

Disclosure of the Invention

The present invention has been made in view of the aforesaid drawbacks, and an object thereof is to provide a method of correcting a machine position change in which an abrupt machining error caused by a difference of the mechanical rigidities of machine parts at which control axes are provided can be suppressed.

To achieve the above object, the present invention provides a method of correcting a change of position of a machine tool having at least two control axes, characterized in that a correction pulse is added to distribution pulses for individual axes, such that the ratio of values of error registers associated with the respective axes is equal to the ratio of the distribution pulses for the respective axes.

The values of the error registers of the respective axes represent values by which the movement has not been achieved by the distribution pulses. Therefore, when the mechanical rigidities of all axes are the same, the ratio of the distribution pulses for the respective axes is usually equal to the ratio of the values of the error registers. Nevertheless, if an error occurs due to a difference in the mechanical rigidities, the ratio of the values of the error registers does not coincide with the ratio of the distribution pulses for the respective axes. Accordingly, a correction pulse is added to the distribution pulses for the respective axes so that the ratio of the values of the error registers associated with the respective axes is equal to the ratio of the distribution pulses for the respective axes, and the axes are controlled in accordance with the resulting output pulses. Accordingly, an abrupt machining error which may otherwise occur at the beginning or just before the end of machining or when machining a corner of a workpiece, can be suppressed.

Brief Description of the Drawings

Fig. 1 is a block diagram showing a method of correcting a machine position change according to the present invention;
Fig. 2 is a flowchart illustrating a position correction method according to an embodiment of the present invention;
Fig. 3 is a diagram showing a state of a cutting interpolation with two axes according to the present embodiment; and
Fig. 4 is a diagram showing a state of a cutting interpolation with two axes according to prior art.

Best Mode of Carrying Out the Invention

An embodiment of the present invention will be hereinafter described with reference to the drawings.

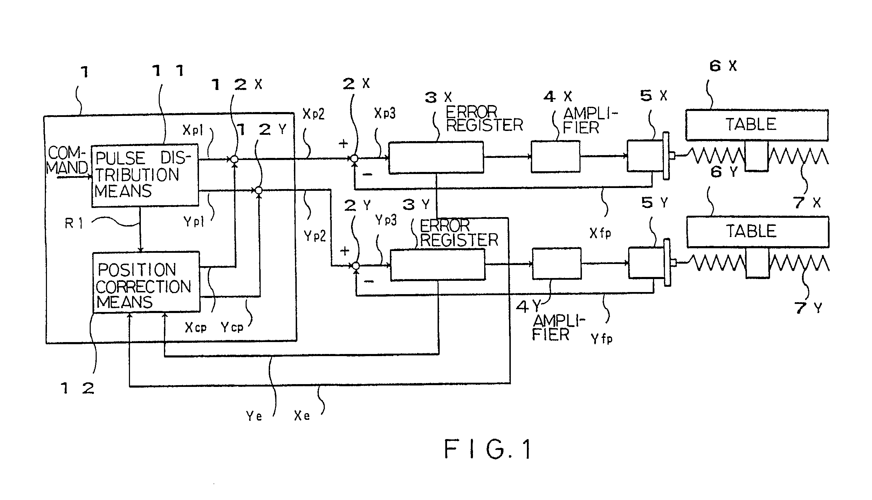

Figure 1 is a block diagram showing a method of correcting a machine position change according to the present invention. A numerical control unit 1 is provided with a pulse distribution means 11 and a position correction means 12.

The pulse distribution means 11 controls servomotors 5X and 5Y. Specifically, the means 11 receives a command based on a machining program from a processor (not shown), carries out an interpolative operation after subjecting the command to an acceleration/deceleration control, and outputs command pulses Xp1 and Yp1 to operators 12X and 12Y to control the servomotors 5X and 5Y associated with the X-and Y-axes, respectively. The pulse distribution means 11 calculates the ratio R1 of the command pulse Xp1 to the pulse Yp1 and outputs a signal R1, representing the result, to the position correction means 12.

The position correction means 12 is supplied with error amount a Xe and Ye from error registers 3X and 3Y, and the signal R1 from the pulse distribution means 11. Thereafter, the position correction means 12 calculates the ratio R2 between the error amounts Xe and Ye, compares the result with the ratio R1 of the command pulse Xp1 to the pulse Yp1, output from the pulse distribution means 11, and supplies a correction pulse Xcp or Ycp to the operator 12X or 12Y, to make the two ratios equal.

The operators 12X and 12Y output command pulses Xp2 and Yp2, which are obtained by adding the command pulses Xp1 and Yp1 to the correction pulses Xcp and Ycp from the position correction means 12, to operators 2X and 2Y.

The operators 2X and 2Y output values obtained by subtracting position feedback pulses Xfp and Yfp of the servomotors 5X and 5Y from the command pulses Xp2 and Yp2, i.e., pulses Xp3 and Yp3 corresponding to the error amounts, to the error registers 3X and 3Y.

The error registers 3X and 3Y store the numbers of the pulses Xp3 and Yp3 corresponding to the error amounts and output voltages corresponding thereto to amplifiers 4X and 4Y.

The amplifiers 4X and 4Y amplify output voltages from the error registers 3X and 3Y and drive the servomotors 5X and 5Y.

The servomotors 5X and 5Y, each including a pulse coder, feed the outputs of the respective pulse coders back to the operators 2X and 2Y as the position feedback pulses Xfp and Yfp.

The servomotors 5X and 5Y are coupled to ball screws 7X and 7Y integral with tables, and therefore, an X-axis table 6X and a Y-axis table 6Y are moved in accordance with the operation of the servomotors 5X and 5Y.

In the figure, the tables 6X and 6Y are shown as separate elements, but in practice they constitute one table. Also in the figure, a spindle control circuit, spindle amplifier and spindle motor for controlling a spindle and the like, are omitted.

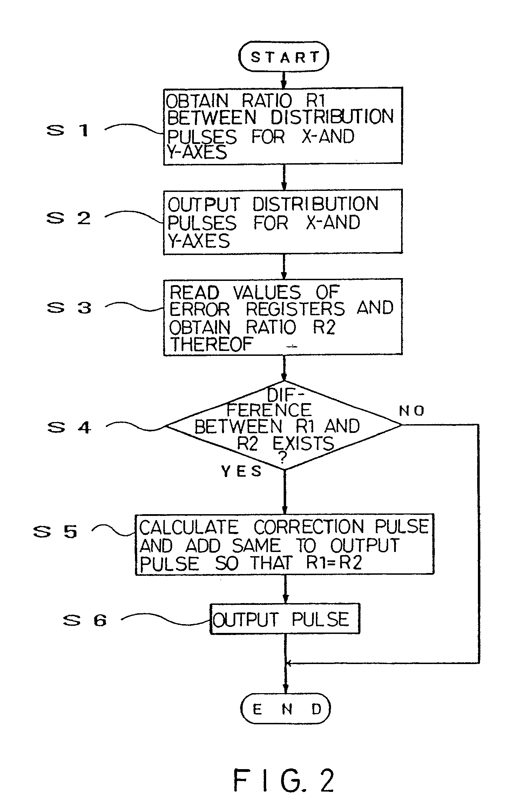

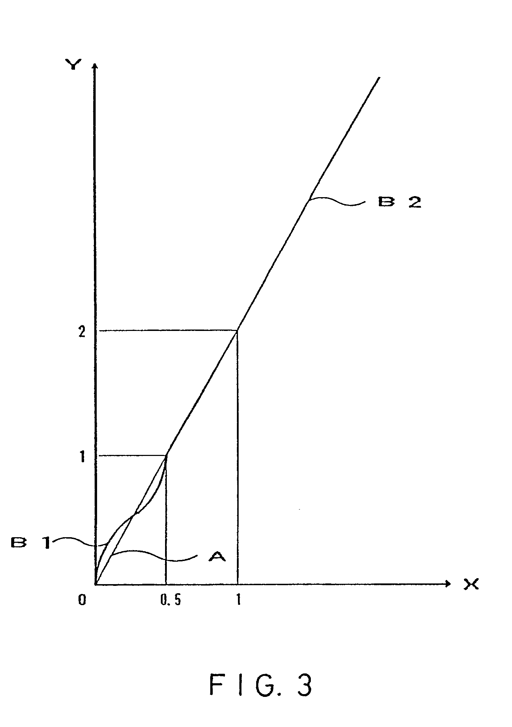

The operation according to the present embodiment will be explained with reference to the drawings. Figure 2 is a flowchart showing the position correction method according to the present embodiment, and Fig. 3 is a diagram showing a state of a cutting interpolation with two axes according to the present embodiment, which corresponds to Fig. 4. In Fig. 2, numerical values following the letter S show the step numbers.

[S1] The pulse distribution means 11 obtains the ratio R1 of the command pulse Xp1 for the X-axis servomotor 5X to the command pulse Yp1 for the Y-axis servomotor 5Y, and output the obtained ratio R1 to the position correction means 12.

[S2] The pulse distribution means 11 outputs distribution pulses in accordance with the commands, i.e., the command pulses Xp1 and Yp1.

Although in this embodiment, the ratio R1 is obtained by the pulse distribution means 11, the pulse distribution means 11 may be designed to output the command pulses Xp1 and Yp1 directly to the positioncorrection means 12, and thus the ratio R1 is obtained at the position correction means 12.

[S3] The position correction means 12 receives the values of the error registers 3X and 3Y, and obtains the ratio R2 of the two values.

[S4] The position correction means 12 compares the ratio R1 with the ratio R2, and determines whether or not a difference exists between the two ratios. If a difference exists, the program proceeds to S5, and if not, the program is ended.

[S5] If it is determined that there is a difference between the ratio R1 and the ratio R2, the position correction means 12 calculates the correction pulse Xcp or Ycp so that the ratio R2 becomes equal to the ratio R1, and adds the correction pulse Xcp or Ycp to the command pulse Xp1 or Yp1.

[S6] The numerical control unit 1 outputs the command pulses Xp2 and Yp2 obtained by adding the correction pulses Xcp and Ycp to the command pulses Xp1 and Yp1, as distribution pulses.

According to the above-described series of processes, a machining error such as that shown in Fig. 4 is suppressed as shown in Fig. 3, in which the error is minimized and the curve B1 is converted to the straight line B2, and thus a more precise linear cutting can be effected. That is, in the present embodiment, the process is repeated in such a manner that the values of the error registers 3X and 3Y are monitored and the correction pulse Xcp or Ycp is added to the output pulse when the ratio R2 of the values of the error registers becomes different from the ratio R1 (1:2), whereby the ratio R2 is made equal to the ratio R1 (1:2). Accordingly, an abrupt machining error such as the one shown in Fig. 4 is inhibited and a cutting as shown in Fig. 3 can be carried out.

Although the above embodiment is described with reference to a two-axes control, the description similarly applies to a control with more than two axes; i.e., the ratio of the values of error registers associated with the respective axes is obtained and correction pulses are output in such a manner that the ratio becomes equal to the ratio of the distribution pulses for the respective axes.

According to the present invention, as described above, an abrupt machining error caused by a difference in the mechanical rigidities of the control axes can be alleviated.

## Claims

1.  A method of correcting a change of position of a machine tool having at least two control axes, wherein a correction pulse is added to distribution pulses for individual axes, such that the ratio of values of error registers associated with the respective axes is equal to the ratio of the distribution pulses for the respective axes.

2.  A method according to claim 1, wherein said control axes are installed in the machine tool at locations having different rigidities.

FIG.1

EP 0 453 572 A1

START

S 1 — OBTAIN RATIO R1 BETWEEN DISTRIBUTION PULSES FOR X-AND Y-AXES

S 2 — OUTPUT DISTRIBUTION PULSES FOR X-AND Y-AXES

S 3 — READ VALUES OF ERROR REGISTERS AND OBTAIN RATIO R2 THEREOF

S 4 — DIF-FERENCE BETWEEN R1 AND R2 EXISTS ?

NO

YES

S 5 — CALCULATE CORRECTION PULSE AND ADD SAME TO OUTPUT PULSE SO THAT R1=R2

S 6 — OUTPUT PULSE

E N D

F I G. 2

F I G. 3

F I G. 4

# INTERNATIONAL SEARCH REPORT

International Application No PCT/JP90/01430

**I. CLASSIFICATION OF SUBJECT MATTER** (if several classification symbols apply, indicate all) ⁶

According to International Patent Classification (IPC) or to both National Classification and IPC

Int. Cl$^5$  G05B19/18

**II. FIELDS SEARCHED**

Minimum Documentation Searched ⁷

| Classification System ɪ | Classification Symbols |
|---|---|
| IPC | G05B19/18 |

Documentation Searched other than Minimum Documentation
to the Extent that such Documents are Included in the Fields Searched ⁸

| | |
|---|---|
| Jitsuyo Shinan Koho | 1926 - 1990 |
| Kokai Jitsuyo Shinan Koho | 1971 - 1990 |

**III. DOCUMENTS CONSIDERED TO BE RELEVANT** ⁹

| Category * | Citation of Document, ¹¹ with indication, where appropriate, of the relevant passages ¹² | Relevant to Claim No. ¹³ |
|---|---|---|
| Y | JP, A, 64-28705 (Yasukawa Electric Mfg. Co., Ltd.), January 31, 1989 (31. 01. 89), Line 11, lower right column, page 1 to line 3, upper left column, page 2 (Family: none) | 1, 2 |
| A | JP, A, 01-185705 (Yasukawa Electric Mfg. Co., Ltd.), July 25, 1989 (25. 07. 89), Line 19, upper right column to line 12, lower left column, page 2 (Family: none) | 1, 2 |
| A | JP, A, 61-23213 (Kobe Steel, Ltd.), January 31, 1986 (31. 01. 86), Line 11, upper left column to line 4, lower left column, page 2 (Family: none) | 1, 2 |

* Special categories of cited documents: ¹⁰

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step

"Y" document of particular relevance; the claimed invention cannot be considered to involve an inventive step when the document is combined with one or more other such documents, such combination being obvious to a person skilled in the art

"&" document member of the same patent family

**IV. CERTIFICATION**

| Date of the Actual Completion of the International Search | Date of Mailing of this International Search Report |
|---|---|
| January 11, 1991 (11. 01. 91) | January 28, 1991 (28. 01. 91) |

| International Searching Authority | Signature of Authorized Officer |
|---|---|
| Japanese Patent Office | |

Form PCT/ISA/210 (second sheet) (January 1985)